# EUROPEAN PATENT SPECIFICATION

(11) **EP 4 269 251 B1**
(45) Date of publication and mention of the grant of the patent: **09.12.2026**
(21) Application number: 23176213.9
(22) Date of filing: 30.05.2023
(51) Int. Cl.: B64D 29/06, E05C 19/14

(54) **AIRCRAFT SAFETY KEEPER FOR LATCH UTILIZATION**
FLUGZEUGSICHERHEITSHALTER ZUR VERRIEGELUNGSVERWENDUNG
DISPOSITIF DE MAINTIEN DE SÉCURITÉ D'AÉRONEF POUR L'UTILISATION DE VERROU

(30) Priority: 08.04.2022 US 202217716897
(43) Date of publication of application: 01.11.2023
(73) Proprietor: Rohr, Inc., Chula Vista, CA 91910-2098 (US)
(72) Inventor: MCMAHAN, Paul F., College Station (US)
(74) Representative: Dehns

(56) References cited:
- CH-A- 443 018
- FR-A2- 2 299 485
- US-A- 4 385 423
- US-A1- 2015 300 061

## Description

### TECHNICAL FIELD

The present disclosure relates generally to latch mechanisms and, more particularly, to latch mechanisms used with aircraft.

### BACKGROUND

Various latching mechanisms exist for use in aircraft as aircraft have many components, such as fuselage panels, including cowlings and the like, which must be opened and closed securely. For example, tension latches mounted on a first panel are typically configured to cinch to a keeper on a second panel to hold the first panel, which may be a moveable panel, closed relative to the second panel. Other latches include sliding toggle linkages to minimize the kinematic envelope of the latch. These linkages rotate around a mounting pin to produce the latch reach. The complexity of certain aircraft latches makes them relatively large and heavy, which is disfavored in aircraft. Accordingly, it is desirable to provide a latch having a reduced size and weight, but that exhibits the strength of larger and heavier latches. Also desirable is a design exhibiting robustness and reduced tendency to disengage during flight of the aircraft.

US 2015/300061 A1 discloses a latching system for selectively securing together two components, such as the fan cowl doors of a nacelle of an aircraft, closed. The latching system generally includes an anchor and a latch. The latch has a handle movable from an open and a closed position. The handle is precluded from reaching the closed position unless the anchor and latch are secured.

CH 443 018 A discloses a lock for side loading trucks or transport containers.

FR 2 299 485 A2 discloses single-bolt fastening device for hinged side panels and tailboards of utility vehicles.

US 4 385 423 A discloses an over-center latching device for coupling two members by the operation of a handle with the use of one hand. The device has a rod having a T at one end for engaging a hook, the other end of the rod being pivotally engaged intermediate the ends of the handle.

### SUMMARY

According to an aspect, a latch mechanism is disclosed as recited by claim 1.

In various embodiments, the T-bolt is adjustable along the longitudinal direction with respect to the T-bolt body.

In various embodiments, the safety keeper further comprises a transverse pin configured for coupling the safety keeper to a cowl panel.

In various embodiments, the safety keeper further comprises a safety keeper longitudinal rod configured for coupling the safety keeper to a cowl panel.

In various embodiments, the load slot comprises a T-bolt receiving portion and a T-bolt loading portion, wherein the T-bolt receiving portion comprises a lateral slot disposed in the safety keeper and the T-bolt loading portion comprises a longitudinal slot disposed in the safety keeper.

In various embodiments, the transverse rod defines a characteristic dimension that is approximately equal to a lateral dimension of at least one of the T-bolt loading portion or the T-bolt receiving portion.

In various embodiments, the end of the longitudinal rod is located externally from the T-bolt body.

In various embodiments, the safety keeper comprises a first longitudinal member and a second longitudinal member, and the load slot is disposed between the first longitudinal member and the second longitudinal member.

In various embodiments, the T-bolt receiving portion is disposed in the second longitudinal member.

According to an aspect, a nacelle is disclosed as recited in claim 10.

In various embodiments, the T-bolt body is pivotally mounted to the first cowl panel via the pin.

In various embodiments, the load slot comprises a T-bolt receiving portion and a T-bolt loading portion, wherein the T-bolt receiving portion comprises a lateral slot disposed in the safety keeper and the T-bolt loading portion comprises a longitudinal slot disposed in the safety keeper.

The foregoing features and elements may be combined in any combination, insofar as it falls within the scope of the appended claims, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B provide schematic illustrations of an aircraft having and aircraft propulsion system, in accordance with various embodiments.;
FIG. 2A provides a perspective schematic illustration of a latch mechanism, in accordance with various embodiments;
FIG. 2B provides a perspective schematic illustration of a latch mechanism, in accordance with various embodiments;
FIG. 3 provides a perspective schematic illustration of a latch mechanism, in accordance with various embodiments;
FIG. 4A, FIG. 4B, FIG. 4C, and FIG. 4D provide perspective schematic illustrations of a T-bolt of a latch mechanism being coupled to a safety keeper, in accordance with various embodiments; and
FIG. 5A, FIG. 5B, and FIG. 5C provide side schematic illustrations of a latch mechanism being coupled to a safety keeper, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

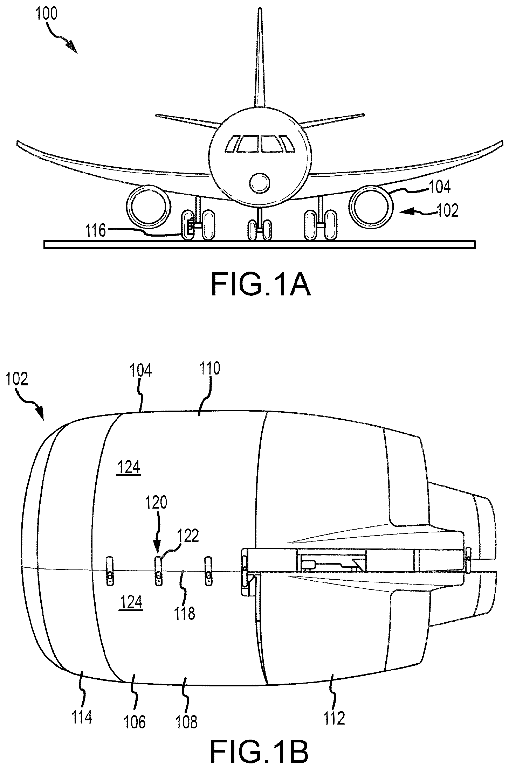

Referring now to the drawings, FIGS. 1A and 1B provide schematic illustrations of an aircraft 100 having an aircraft propulsion system 102, in accordance with various embodiments. The aircraft propulsion system 102 may include various systems, such as, for example, a gas turbine engine system housed within a nacelle 104. The nacelle 104 typically comprises a plurality of aerodynamic panels, such as, for example, one or more core cowl panels 106 (*e.g.,* a first core cowl panel 108 and a second core cowl panel 110), one or more thrust reverser panels 112 and one or more fan cowl panels 114, each of which may be removable, hinged, or otherwise configurable to enable access to internal components of the aircraft 100 or the aircraft propulsion system 102. The aircraft 100 may also include various additional systems, such as, for example, one or more landing gear 116, which generally support the aircraft 100 when the aircraft 100 is not flying, allowing the aircraft 100 to taxi, takeoff or land without damage.

In various embodiments and with additional reference to the nacelle 104 illustrated in FIG. 1B, the first core cowl panel 108 and the second core cowl panel 110 are coupled, in various embodiments, along a seam 118 by a latch mechanism 120 (or a plurality of latch mechanisms). In the latched state, a latch handle 122 of the latch mechanism 120 may sit relatively flush or may be recessed within an aerodynamic panel surface 124 defined by the first core cowl panel 108 and the second core cowl panel 110. In the unlatched state, the latch handle 122 of the latch mechanism 120 may protrude above or outside of the aerodynamic panel surface 124. While the foregoing description of the latch mechanism 120 is presented with reference to the first core cowl panel 108 and the second core cowl panel 110, a similar description may be provided with reference to other panel assemblies of the aircraft 100 or the aircraft propulsion system 102, including, for example, the one or more thrust reverser panels 112 and the one or more fan cowl panels 114.

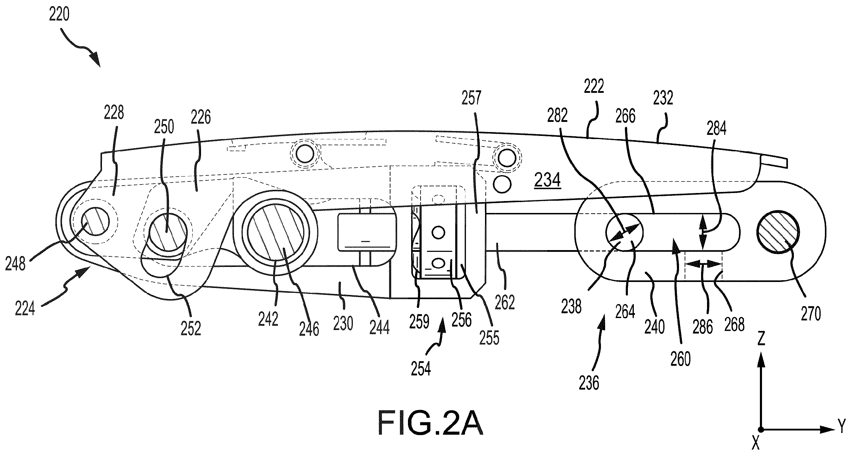

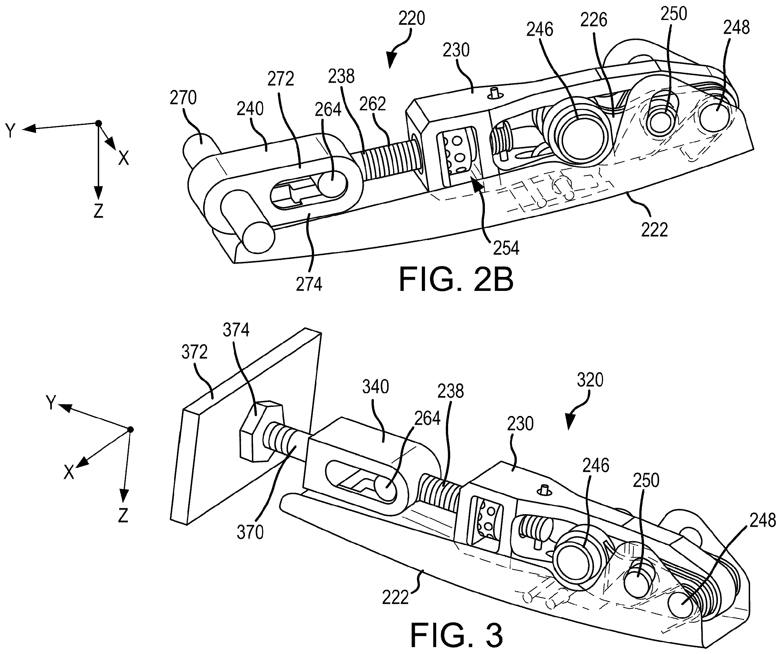

Referring now to FIG. 2A and FIG. 2B, a latch mechanism 220 (*e.g.,* a latch mechanism for an aircraft panel), similar to the latch mechanism 120 described above with reference to FIG. 1B, is illustrated and its operation described. In various embodiments, latch mechanism 220 is an over-center latch mechanism. The latch mechanism 220 comprises a latch handle 222 pivotally coupled to a body 230 (also referred to herein as a T-bolt body). The latch handle 222 is further coupled to a latch linkage 224. The latch linkage 224 includes a first link 226 (or a forward link) and a second link 228 (or an aft link). The latch handle 222 includes an upper surface 232 extending between a first face 234 and a second face (opposite the first face 234) to define, in cross section through the ZX-plane, a relatively U-shaped latch handle. The first link 226 is configured to pivot about an axle 242 and to slide in an axial direction (*i.e.,* in the Y-direction) with respect to an axial cutout 244 of the body 230. The axle 242 extends through the axial cutout 244 and is connected to a cowl panel, such as, for example, the second core cowl panel 110 described above, via a first pin 246 (or a forward pin) that extends through the axle 242. In this manner, the first pin 246 may enable the body 230 to slide in the longitudinal direction with respect to the first pin 246 in response to the latch handle 222 moving between a closed position and an open position. The second link 228 is pivotally connected to the latch handle 222 and to the body 230 via a second pin 248 (or an aft pin), while both the first link 226 and the second link 228 are pivotally connected to each other via a third pin 250.

The latch mechanism 220 also includes a lock mechanism 236, including a T-bolt 238 and a keeper 240 (also referred to herein as a safety keeper). In various embodiments, the T-bolt 238 is a T-shaped piece of material (e.g., metal) having a longitudinal rod 262 (e.g., a first rod extending in the Y-direction or a longitudinal direction) and a transverse rod 264 (e.g., a second rod extending in the X-direction or a lateral direction). Transverse rod 264 may be attached to an end of the longitudinal rod 262. In various embodiments, transverse rod 264 and longitudinal rod 262 are formed as a single piece of material (e.g., an integral or monolithic structure). In various embodiments, the transverse rod 264 defines a diameter 282 (or a characteristic dimension) that is approximately equal to a lateral dimension 284 (i.e., in the Z-direction) of a T-bolt loading portion 266 (or a longitudinal slot) of a load slot 260 and to a longitudinal dimension 286 (i.e., in the Y-direction) of a T-bolt receiving portion 268 (or a lateral slot) of the load slot 260, wherein the term "approximately" as used in this context can only mean between 90% and 100% of the lateral dimension 284 and/or the longitudinal dimension 286. The diameter 282 may be between 75% and 100% of the lateral dimension 284 and/or of the longitudinal dimension 286 in various embodiments, between 85% and 100% of the lateral dimension 284 and/or of the longitudinal dimension 286 in various embodiments, or between 90% and 100% of the lateral dimension 284 and/or of the longitudinal dimension 286 in various embodiments. The diameter 282 may be between 75% and 99% of the lateral dimension 284 and/or of the longitudinal dimension 286 in various embodiments, between 85% and 98% of the lateral dimension 284 and/or of the longitudinal dimension 286 in various embodiments, or between 80% and 98% of the lateral dimension 284 and/or of the longitudinal dimension 286 in various embodiments. As illustrated, in various embodiments, the T-bolt loading portion 266 (or longitudinal slot) and the T-bolt receiving portion 268 (or lateral slot) are generally perpendicular to one another in the YZ-plane. Note that while the longitudinal rod 262 and the transverse rod 264 are described and illustrated as having generally circular cross-sectional geometries, other cross-sectional geometries, such as, for example, square or N-pentagonal (where N is the number of sides) cross-sectional geometries are also contemplated.

The safety keeper 240 includes a plurality of longitudinal members extending in a longitudinal direction (i.e., the Y-direction), including a first longitudinal member 272 and a second longitudinal member 274, the second longitudinal member 274 spaced a lateral distance (i.e., in the Z-direction) from the first longitudinal member 272. The first longitudinal member 272 and the second longitudinal member 274 at least partially define the load slot 260. The load slot 260 is disposed between the first longitudinal member 272 and the second longitudinal member 274. Safety keeper 240 may surround the entire perimeter of load slot 260 when viewed from the side (i.e., along the X-direction). In this manner, the transverse rod 264 may be entirely surrounded by safety keeper 240 when the transverse rod 264 is in the load slot 260, with the only means for decoupling the transverse rod 264 from safety keeper 240 being to align the transverse rod 264 with the T-bolt receiving portion 268 whereby the transverse rod 264 may exit the T-bolt loading portion 266, as described herein. The T-bolt receiving portion 268 may be disposed in the second longitudinal member 274.

The T-bolt 238 may be adjustably coupled (*i.e.,* in the Y-direction or a longitudinal direction) to the body 230. Safety keeper 240 may be mounted to a cowl panel, such as, for example, the first core cowl panel 108 (or the second core cowl panel 110) described above. Safety keeper 240 may be coupled to a first cowl panel (e.g., first core cowl panel 108) and T-bolt 238 may be coupled to a second cowl panel (e.g., second core cowl panel 110). T-bolt 238 may be configured to removably couple with safety keeper 240. In this manner, safety keeper 240 may be removably coupled with T-bolt 238 to secure the first and second cowl panels in a closed position, and may further provide a load path between the two cowl panels along a hoop direction or the longitudinal direction (*i.e.,* in the Y-direction in FIG. 2A).

In operation, (e.g., when decoupling the first core cowl panel 108 and the second core cowl panel 110), the latch handle 222 is rotated about the second pin 248 and away from the body 230, causing the first link 226 and the second link 228 to articulate with respect to each other about the third pin 250. The mutual articulation about the third pin 250, caused by engagement of a channel 252 cut into the latch handle 222 with the third pin 250, thereby further causes the body 230, together with the T-bolt 238, to be urged in an axial direction (*i.e.,* the Y-direction) with respect to the first pin 246, which remains stationary with respect to the cowl panel to which the latch mechanism 220 is connected (*e.g.,* the second core cowl panel 110). Once the T-bolt 238 is decoupled from safety keeper 240, the first core cowl panel 108 and the second core cowl panel 110 may be decoupled. Coupling the first core cowl panel 108 and the second core cowl panel 110 is accomplished by reversing the operational steps above described.

In various embodiments, the coupling and decoupling of the latch mechanism 220 to safety keeper 240 may be adjusted by adjusting the location of the T-bolt 238 with respect to the body 230 using an adjustment mechanism 254 that comprises, for example, an adjustment nut 256 threadedly coupled to a shaft 258 that is connected to the T-bolt 238. In various embodiments, the shaft 258 is formed integrally with the T-bolt 238 (*i.e.,* the shaft 258 and the T-bolt 238 comprising a single piece of material). Rotating the adjustment nut 256 in a first direction, for example, increases the distance (or axial position) between the T-bolt 238 and the body 230, while rotating the adjustment nut 256 in a second direction decreases the distance (or axial position) between the T-bolt 238 and the body 230. In this manner, adjustment nut 256 may be configured to provide a preload and/or take-up adjustment to the T-bolt 238. In various embodiments, a bearing block 255 is positioned between the adjustment nut 256 and a body load bearing plate 257 of the body 230, while a bias element 259 (*e.g.,* a wave spring) is disposed aft of the adjustment nut 256 and configured to bias the adjustment nut 256 toward the bearing block 255 and the body load bearing plate 257 when the latch mechanism 220 assumes a decoupled or an unloaded state.

Safety keeper 240 may be mounted to a cowl panel, such as, for example, the first core cowl panel 108 (or the second core cowl panel 110) via a variety of methods. For example, with combined reference to FIG. 2A and FIG. 2B, safety keeper 240 may be mounted to a cowl panel, such as, for example, the first core cowl panel 108 (or the second core cowl panel 110) via a transverse pin 270 (e.g., a pin extending in the X-direction or a lateral direction), in accordance with various embodiments. Pin 270 may extend through safety keeper 240 to secure safety keeper 240 to the cowl panel. In various embodiments, pin 270 and safety keeper 240 are formed as a single piece of material. In various embodiments, pin 270 is removably coupled to safety keeper 240. Transverse pin 270 may be longitudinally spaced apart from load slot 260. In various embodiments, and with reference to FIG. 3, safety keeper 340 may be mounted to a cowl panel, such as, for example, the first core cowl panel 108 (or the second core cowl panel 110) via a longitudinal rod 370 (e.g., a rod extending in the Y-direction or a longitudinal direction) and a plate or web 372 whereupon safety keeper longitudinal rod 370 is mounted. Safety keeper longitudinal rod 370 may be a threaded rod. In this manner, the position (e.g., along the Y-direction) of safety keeper 340 with respect to body 230 and/or T-bolt 238 may be adjusted with safety keeper longitudinal rod 370. In various embodiments, web 372 may comprise a threaded fastener 374 whereby safety keeper longitudinal rod 370 is coupled to web 372 via a threaded connection. In various embodiments, safety keeper longitudinal rod 370 may replace adjustment mechanism 254 for adjusting the position of safety keeper 340 with respect to T-bolt 238, though it is also contemplated that safety keeper longitudinal rod 370 and adjustment mechanism 254 may both be provided. In various embodiments, safety keeper 340 may be non-adjustably coupled to web 372 via safety keeper longitudinal rod 370. It should be understood that safety keeper 340 may be coupled to a cowl panel via any suitable method and the scope of the present disclosure is not be particularly limited in this regard.

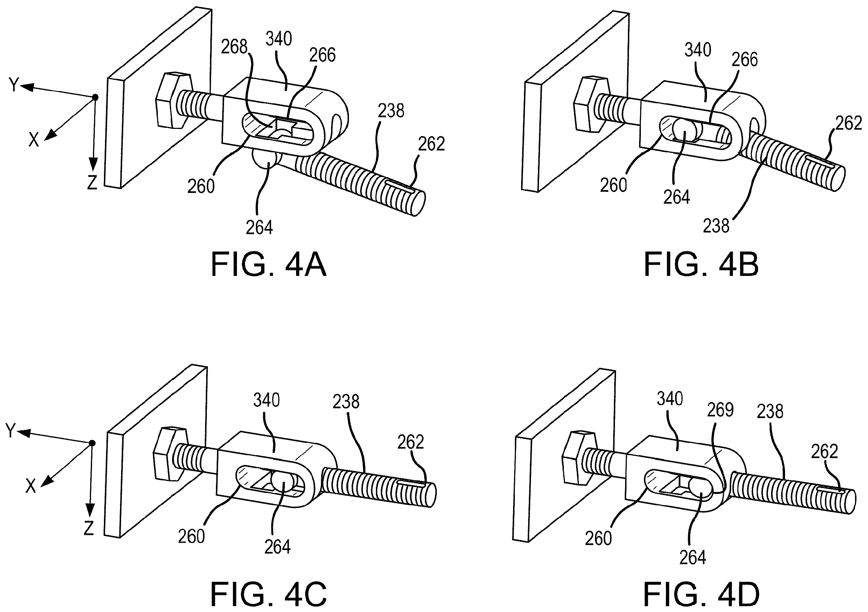

With reference to FIG. 4A through FIG. 4D, steps for installing T-bolt 238 into safety keeper 340 are illustrated, in accordance with various embodiments. With reference to FIG. 4A, prior to coupling the T-bolt 238 with safety keeper 340, transverse rod 264 of the T-bolt 238 is aligned with the T-bolt receiving portion 268 of the load slot 260. Once aligned, the transverse rod 264 is inserted into the T-bolt receiving portion 268 and translated toward the T-bolt loading portion 266, typically by rotating the T-bolt 238 toward safety keeper 340. As illustrated in FIG. 4B, once the transverse rod 264 is disposed within the T-bolt loading portion 266 of the load slot 260, the T-bolt 238 is translated (see FIG. 4C) in a longitudinal direction (i.e., the -Y direction) until a loading end 269 of the T-bolt loading portion 266 is engaged and loaded against the transverse rod 264 (see FIG. 4D). The T-bolt 238 and safety keeper 340 are then coupled or engaged. Decoupling or disengaging the T-bolt 238 and safety keeper 340 is accomplished by reversing the steps outlined above.

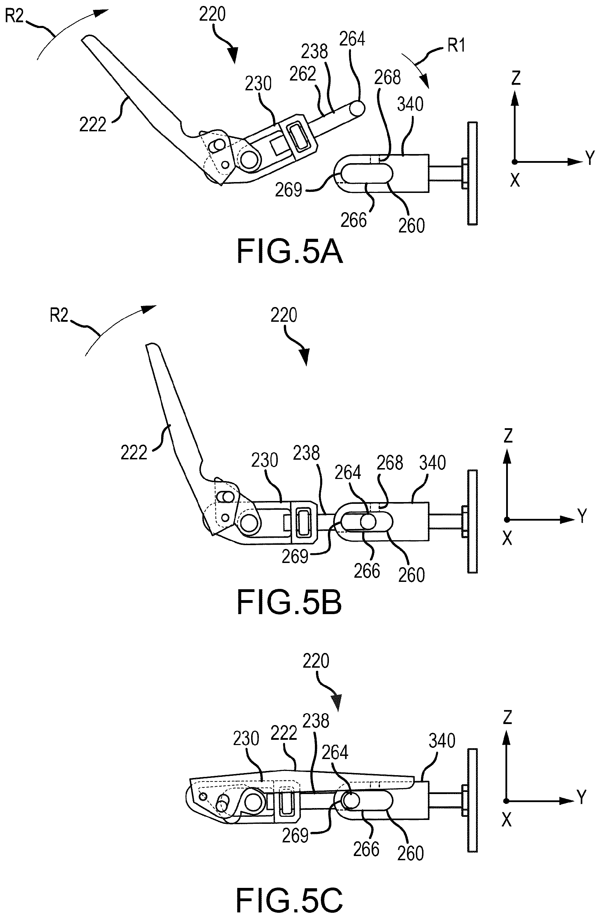

With reference to FIG. 4A through FIG. 4D, schematic illustrations of the latch mechanism 220 are provided to further describe the process of coupling or engaging safety keeper 340 to the T-bolt 238. As described above, safety keeper 340 includes a load slot 260, with the load slot 260 having a T-bolt loading portion 266 (or a longitudinal slot) and a T-bolt receiving portion 268 (or a lateral slot). As illustrated in FIG. 5A, prior to coupling the T-bolt 238 with safety keeper 340, a transverse rod 264 of the T-bolt 238 is aligned with the T-bolt receiving portion 268 of the load slot 260. Once aligned, the transverse rod 264 is inserted into the T-bolt receiving portion 268 and translated toward the T-bolt loading portion 266, typically by rotating (R₁) the body 230 toward safety keeper 340 by operating or rotating (R₂) a latch handle 222 toward the body 230 in the direction shown and as described above and with reference to FIG. 2A. As illustrated in FIG. 5B, once the transverse rod 264 is disposed within the T-bolt loading portion 266 of the load slot 260, the body 230 and T-bolt 238 are translated in a longitudinal direction (i.e., the -Y direction) until a loading end 269 of the T-bolt loading portion 266 is engaged and loaded against the transverse rod 264. The T-bolt 238 and safety keeper 340 are then coupled or engaged. Decoupling or disengaging the T-bolt 238 and safety keeper 340 is accomplished by reversing the steps outlined above.

The foregoing disclosure provides a safety keeper and a latch mechanism that constrains the loads experienced by the safety keeper to lie primarily in a longitudinal direction, thereby preventing or reducing various moments or torques that might otherwise occur when loading the latch mechanism. Reducing the moments or torques enables the loads experienced by the various components to be confined to pure axial loads, typically in tension, when the latch mechanism is in a deployed, coupled, or engaged state. The disclosure provides for a latch mechanism that provides additional safety over more conventional hook and pin assemblies for latch mechanisms, whereby a hook disposed at an end of the T-bolt body is configured to engage the pin. For example, as described above, at least two separate motions of the T-bolt are required to separate the T-bolt from the safety keeper, the first being a longitudinal translation of the transverse rod of the T-bolt with respect to the safety keeper (or the loading portion of the load slot) and the second being a lateral translation of the transverse rod of the T-bolt with respect to the safety keeper (or the receiving portion of the load slot). The two separate motions make the occurrence of an unintended decoupling or disengagement of the T-bolt from the safety keeper very unlikely. These features of the safety keeper and T-bolt enable the disclosed latch mechanism to remain engaged, even in the event a latch handle opened and/or over-center of the latch mechanism is lost, thereby minimizing the risk of losing (and/or loosening of) a cowl panel during flight.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments falling within the scope of the appended claims.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of the claims. Accordingly, the description is not intended to be exhaustive or to limit the principles described or illustrated herein to any precise form. Many modifications and variations are possible in light of the above teaching.

## Claims

1. A latch mechanism (120; 220), comprising:
a T-bolt body (230);
a T-bolt (238) comprising a longitudinal rod (262) extending in a longitudinal direction from the T-bolt body (230) and a transverse rod (264) disposed at an end of the longitudinal rod (262);
a safety keeper (240; 340) defining a load slot (260) configured to receive the transverse rod (264) whereby the T-bolt (238) is configured to secure the T-bolt body (230) with respect to the safety keeper (240; 340); and
a latch handle (122; 222) pivotally coupled to the T-bolt body (230), wherein the T-bolt (238) is configured to translate along the longitudinal direction with respect to the safety keeper (240; 340) in response to the latch handle (122; 222) moving between an open position and a closed position,
wherein the T-bolt body (230) comprises an axial cutout (244) extending longitudinally,
wherein the axial cutout (244) is configured to receive a first pin (246) and enable the T-bolt body (230) to slide in the longitudinal direction with respect to the first pin (246), and
wherein the latch handle (122; 222) is coupled to a latch linkage (224), the latch linkage (224) including a first link (226) and a second link (228),
wherein the first link (226) is configured to pivot about an axle (242), the first pin (246) extending through the axle (242), and to slide in an axial direction with respect to the axial cutout (244) of the T-bolt body (230); and
wherein the second link (228) is pivotally connected to the latch handle (222) and to the T-bolt body (230) via a second pin (248), while both the first link (226) and the second link (228) are pivotally connected to each other via a third pin (250), and
wherein articulation of the first link (226) and the second link (228) with respect to each other about the third pin (250) is caused by engagement of a channel (252) cut into the latch handle (222) with the third pin (250).

2. The latch mechanism of claim 1, wherein the T-bolt (238) is adjustable along the longitudinal direction with respect to the T-bolt body (230).

3. The latch mechanism of claim 1 or 2, wherein the safety keeper (240; 340) further comprises a transverse pin (270) configured for coupling the safety keeper (240; 340) to a cowl panel (108).

4. The latch mechanism of claim 1 or 2, wherein the safety keeper (240; 340) further comprises a safety keeper longitudinal rod (370) configured for coupling the safety keeper (240; 340) to a cowl panel (108).

5. The latch mechanism of any preceding claim, wherein the load slot (260) comprises a T-bolt receiving portion (268) and a T-bolt loading portion (266), wherein the T-bolt receiving portion (268) comprises a lateral slot disposed in the safety keeper (240; 340) and the T-bolt loading portion (266) comprises a longitudinal slot disposed in the safety keeper (240; 340).

6. The latch mechanism of claim 5, wherein the transverse rod (264) defines a characteristic dimension that is approximately equal to a lateral dimension of at least one of the T-bolt loading portion (266) or the T-bolt receiving portion (268).

7. The latch mechanism of any preceding claim, wherein the end of the longitudinal rod (262) is located externally from the T-bolt body (230), wherein the transverse rod (264) is configured to translate along the longitudinal direction in response to the latch handle (122; 222) moving between the closed position and the open position.

8. The latch mechanism of claim 7, wherein the safety keeper (240; 340) comprises a first longitudinal member and a second longitudinal member, and the load slot (260) is disposed between the first longitudinal member and the second longitudinal member.

9. The latch mechanism of claim 8, wherein the T-bolt receiving portion (268) is disposed in the second longitudinal member.

10. A nacelle (104), comprising:
a first cowl panel (110);
a second cowl panel (108) moveable with respect to the first cowl panel (110); and
the latch mechanism of any of claims 1 to 8, configured to secure the first cowl panel (110) with respect to the second cowl panel (108),
wherein the T-bolt body (230) is mounted to the first cowl panel (110); and
wherein the safety keeper (240; 340) is mounted to the second cowl panel (108) whereby the T-bolt (238) is configured to secure the T-bolt body (230) with respect to the safety keeper (240; 340) for securing the first cowl panel (110) with respect to the second cowl panel (108).

11. The nacelle of claim 10, wherein the T-bolt body (230) is pivotally mounted to the first cowl panel (110) via the pin (246).

## Patentansprüche

1. Ein Verriegelungsmechanismus (120; 220), umfassend:
einen T-Bolzenkörper (230);
einen T-Bolzen (238), umfassend eine Längsstange (262), die sich in einer Längsrichtung von dem T-Bolzenkörper (230) erstreckt, und eine Querstange (264), die an einem Ende der Längsstange (262) angeordnet ist;
einen Sicherheitshalter (240; 340), der einen Lastschlitz (260) definiert, der zur Aufnahme der Querstange (264) ausgebildet ist, wodurch der T-Bolzen (238) dazu ausgebildet ist, den T-Bolzenkörper (230) bezüglich des Sicherheitshalters (240; 340) zu sichern; und
einen Verriegelungsgriff (122; 222), der schwenkbar mit dem T-Bolzenkörper (230) gekoppelt ist, wobei der T-Bolzen (238) dazu ausgebildet ist, sich in der Längsrichtung bezüglich des Sicherheitshalters (240; 340) zu verschieben, in Reaktion darauf, dass sich der Verriegelungsgriff (122; 222) zwischen einer offenen Stellung und einer geschlossenen Stellung bewegt,
wobei der T-Bolzenkörper (230) einen sich längs erstreckenden Axialausschnitt (244) umfasst,
wobei der Axialausschnitt (244) dazu ausgebildet ist, einen ersten Stift (246) aufzunehmen, und es dem T-Bolzen (230) ermöglicht, sich in der Längsrichtung bezüglich des ersten Stiftes (246) zu verschieben,
und
wobei der Verriegelungsgriff (122; 222) mit einem Verriegelungsgestänge (224) gekoppelt ist, wobei das Verriegelungsgestänge (224) ein erstes Glied (226) und ein zweites Glied (228) umfasst,
wobei das erste Glied (226) dazu ausgebildet ist, um eine Achse (242) zu schwenken, wobei der erste Stift (246) sich durch die Achse (242) erstreckt, und sich in einer axialen Richtung bezüglich des Axialausschnitts (244) des T-Bolzenkörpers (230) zu verschieben; und
wobei das zweite Glied (228) schwenkbar mit dem Verriegelungsgriff (222) und mit dem T-Bolzenkörper (230) über einen zweiten Stift (248) verbunden ist, während sowohl das erste Glied (226) als auch das zweite Glied (228) schwenkbar miteinander über einen dritten Stift (250) verbunden sind, und
wobei eine Gelenkbewegung des ersten Glieds (226) und des zweiten Glieds (228) zueinander um den dritten Stift (250) durch einen Eingriff eines in den Verriegelungsgriff (222) eingeschnittenen Kanals (252) mit dem dritten Stift (250) bewirkt wird.

2. Der Verriegelungsmechanismus nach Anspruch 1, wobei der T-Bolzen (238) entlang der Längsrichtung bezüglich des T-Bolzenkörpers (230) einstellbar ist.

3. Der Verriegelungsmechanismus nach Anspruch 1 oder 2, wobei der Sicherheitshalter (240; 340) ferner einen Querstift (270) umfasst, der zur Kopplung des Sicherheitshalters (240; 340) mit einer Verkleidungsplatte (108) ausgebildet ist.

4. Der Verriegelungsmechanismus nach Anspruch 1 oder 2, wobei der Sicherheitshalter (240; 340) ferner eine Sicherheitshalter-Längsstange (370) umfasst, die zur Kopplung des Sicherheitshalters (240; 340) mit einer Verkleidungsplatte (108) ausgebildet ist.

5. Der Verriegelungsmechanismus nach einem der vorhergehenden Ansprüche, wobei der Lastschlitz (260) einen T-Bolzen-Aufnahmeabschnitt (268) und einen T-Bolzen-Beladungsabschnitt (266) umfasst, wobei der T-Bolzen-Aufnahmeabschnitt (268) einen in dem Sicherheitshalter (240; 340) angeordneten lateralen Schlitz umfasst und der T-Bolzen-Beladungsabschnitt (266) einen in dem Sicherheitshalter (240; 340) angeordneten Längsschlitz umfasst.

6. Der Verriegelungsmechanismus nach Anspruch 5, wobei die Querstange (264) eine charakteristische Abmessung definiert, die annähernd gleich einer lateralen Abmessung von mindestens einem von dem T-Bolzen-Beladungsabschnitt (266) oder dem T-Bolzen-Aufnahmeabschnitt (268) ist.

7. Der Verriegelungsmechanismus nach einem der vorhergehenden Ansprüche, wobei sich das Ende der Längsstange (262) außerhalb des T-Bolzenkörpers (230) befindet, wobei die Querstange (264) dazu ausgebildet ist, sich entlang der Längsrichtung in Reaktion darauf zu verschieben, dass sich der Verriegelungsgriff (122; 222) zwischen der geschlossenen Stellung und der offenen Stellung bewegt.

8. Der Verriegelungsmechanismus nach Anspruch 7, wobei der Sicherheitshalter (240; 340) ein erstes Längselement und ein zweites Längselement umfasst, und der Lastschlitz (260) zwischen dem ersten Längselement und dem zweiten Längselement angeordnet ist.

9. Der Verriegelungsmechanismus nach Anspruch 8, wobei der T-Bolzen-Aufnahmeabschnitt (268) in dem zweiten Längselement angeordnet ist.

10. Eine Triebwerksgondel (104), umfassend:
eine erste Verkleidungsplatte (110);
eine zweite Verkleidungsplatte (108), die bezüglich der ersten Verkleidungsplatte (110) beweglich ist; und
den Verriegelungsmechanismus nach einem der Ansprüche 1 bis 8, der dazu ausgebildet ist, die erste Verkleidungsplatte (110) bezüglich der zweiten Verkleidungsplatte (108) zu sichern,
wobei der T-Bolzenkörper (230) an der ersten Verkleidungsplatte (110) befestigt ist; und
wobei der Sicherheitshalter (240; 340) an der zweiten Verkleidungsplatte (108) befestigt ist, wodurch der T-Bolzen (238) dazu ausgebildet ist, den T-Bolzenkörper (230) bezüglich des Sicherheitshalters (240; 340) zu sichern, um die erste Verkleidungsplatte (110) bezüglich der zweiten Verkleidungsplatte (108) zu sichern.

11. Die Triebwerksgondel nach Anspruch 10, wobei der T-Bolzenkörper (230) schwenkbar an der ersten Verkleidungsplatte (110) über den Stift (246) befestigt ist.

## Revendications

1. Mécanisme de verrouillage (120 ; 220), comprenant :
un corps de boulon en T (230) ;
un boulon en T (238) comprenant une tige longitudinale (262) s'étendant dans une direction longitudinale depuis le corps de boulon en T (230) et une tige transversale (264) disposée à une extrémité de la tige longitudinale (262) ;
un dispositif de sécurité (240 ; 340) définissant une fente de charge (260) configurée pour recevoir la tige transversale (264), de sorte que le boulon en T (238) est configuré pour fixer le corps de boulon en T (230) par rapport au dispositif de sécurité (240 ; 340) ; et
une poignée de verrouillage (122 ; 222) couplée de manière pivotante au corps de boulon en T (230), dans lequel le boulon en T (238) est configuré pour se translater dans la direction longitudinale par rapport au dispositif de sécurité (240 ; 340) en réponse au déplacement de la poignée de verrouillage (122 ; 222) entre une position ouverte et une position fermée,
dans lequel le corps de boulon en T (230) comprend une découpe axiale (244) s'étendant longitudinalement,
dans lequel la découpe axiale (244) est configurée pour recevoir une première broche (246) et permettre au boulon en T (230) de coulisser dans la direction longitudinale par rapport à la première broche (246),
et
dans lequel la poignée de verrouillage (122 ; 222) est couplée à une tringlerie de verrouillage (224), la tringlerie de verrouillage (224) comprenant une première biellette (226) et une deuxième biellette (228),
dans lequel la première biellette (226) est configurée pour pivoter autour d'un axe (242), la première broche (246) s'étendant à travers l'axe (242), et pour coulisser dans une direction axiale par rapport à la découpe axiale (244) du corps de boulon en T (230) ; et
dans lequel la deuxième biellette (228) est reliée de manière pivotante à la poignée de verrouillage (222) et au corps de boulon en T (230) par l'intermédiaire d'une deuxième broche (248), tandis que la première biellette (226) et la deuxième biellette (228) sont toutes deux reliées de manière pivotante l'une à l'autre par l'intermédiaire d'une troisième broche (250), et
dans lequel l'articulation de la première biellette (226) et de la deuxième biellette (228) l'une par rapport à l'autre autour de la troisième broche (250) est provoquée par l'engagement d'un canal (252) découpé dans la poignée de verrouillage (222) avec la troisième broche (250).

2. Mécanisme de verrouillage selon la revendication 1, dans lequel le boulon en T (238) est réglable dans la direction longitudinale par rapport au corps de boulon en T (230).

3. Mécanisme de verrouillage selon la revendication 1 ou 2, dans lequel le dispositif de sécurité (240 ; 340) comprend en outre une broche transversale (270) configurée pour coupler le dispositif de sécurité (240 ; 340) à un panneau de capot (108).

4. Mécanisme de verrouillage selon la revendication 1 ou 2, dans lequel le dispositif de sécurité (240 ; 340) comprend en outre une tige longitudinale de dispositif de sécurité (370) configurée pour coupler le dispositif de sécurité (240 ; 340) à un panneau de capot (108).

5. Mécanisme de verrouillage selon l'une quelconque des revendications précédentes, dans lequel la fente de charge (260) comprend une partie de réception de boulon en T (268) et une partie de chargement de boulon en T (266), dans lequel la partie de réception de boulon en T (268) comprend une fente latérale disposée dans le dispositif de sécurité (240 ; 340) et la partie de chargement de boulon en T (266) comprend une fente longitudinale disposée dans le dispositif de sécurité (240 ; 340).

6. Mécanisme de verrouillage selon la revendication 5, dans lequel la tige transversale (264) définit une dimension caractéristique qui est approximativement égale à une dimension latérale d'au moins l'une de la partie de chargement de boulon en T (266) ou de la partie de réception de boulon en T (268).

7. Mécanisme de verrouillage selon l'une quelconque des revendications précédentes, dans lequel l'extrémité de la tige longitudinale (262) est située à l'extérieur du corps de boulon en T (230), dans lequel la tige transversale (264) est configurée pour se translater dans la direction longitudinale en réponse au déplacement de la poignée de verrouillage (122 ; 222) entre la position fermée et la position ouverte.

8. Mécanisme de verrouillage selon la revendication 7, dans lequel le dispositif de sécurité (240 ; 340) comprend un premier élément longitudinal et un second élément longitudinal, et la fente de charge (260) est disposée entre le premier élément longitudinal et le second élément longitudinal.

9. Mécanisme de verrouillage selon la revendication 8, dans lequel la partie de réception de boulon en T (268) est disposée dans le second élément longitudinal.

10. Nacelle (104), comprenant :
un premier panneau de capot (110) ;
un second panneau de capot (108) mobile par rapport au premier panneau de capot (110) ; et
le mécanisme de verrouillage selon l'une quelconque des revendications 1 à 8, configuré pour fixer le premier panneau de capot (110) par rapport au second panneau de capot (108),
dans lequel le corps de boulon en T (230) est monté sur le premier panneau de capot (110) ; et
dans lequel le dispositif de sécurité (240 ; 340) est monté sur le second panneau de capot (108), de sorte que le boulon en T (238) est configuré pour fixer le corps de boulon en T (230) par rapport au dispositif de sécurité (240 ; 340) afin de fixer le premier panneau de capot (110) par rapport au second panneau de capot (108).

11. Nacelle selon la revendication 10, dans laquelle le corps de boulon en T (230) est monté de manière pivotante sur le premier panneau de capot (110) par l'intermédiaire de la broche (246).
